# DEMANDE DE BREVET EUROPEEN

(11) **EP 2 469 768 A1**
(43) Date de publication de la demande: **27.06.2012**
(21) Numéro de dépôt: 11194461.7
(22) Date de dépôt: 20.12.2011
(51) Int. Cl.: H04L 12/28

(54) **Procédé d'interfaçage de dispositifs UPnP**

(30) Priorité: 22.12.2010 FR 1061037
(71) Demandeur: France Telecom, 75015 Paris (FR)
(72) Inventeur: Agro, Roberto, 92340 Bourg la Reine (FR); Bendiabdallah, Halim, 92430 MARNES LA COQUETTE (FR)
(74) Mandataire: Le Saux, Gaël

(57) **Abrégé**

L'invention concerne un Procédé d'interfaçage d'au moins une première entité d'un premier réseau avec une deuxième entité d'un deuxième réseau interconnecté avec le premier réseau via une passerelle, les première et deuxième entités présentant une interface de communication conforme à un protocole de commande, le procédé étant mis en oeuvre par ladite passerelle.

Selon l'invention, un tel procédé comprend :
- une étape de réception d'un message émis via le deuxième réseau par la deuxième entité lors de la mise en oeuvre d'une procédure de découverte d'entités présentant une interface de communication conforme audit protocole;
- une étape d'activation d'un module mandataire, apte à communiquer via le deuxième réseau avec la deuxième entité conformément audit protocole de commande et simulant la présence au sein du deuxième réseau d'au moins une première entité du premier réseau.

## Description

### 1 DOMAINE DE L'INVENTION

L'invention se rapporte de manière générale aux techniques de télécommunication, et plus particulièrement au pilotage d'un dispositif d'un réseau privé à partir d'un réseau invité. Plus généralement, le réseau invité et le réseau privé sont deux réseaux gérés par un équipement de l'utilisateur, comme par exemple une passerelle résidentielle.

Différentes technologies connues permettent d'établir une connexion d'un réseau à un autre, dans un but par exemple de commande d'une entité d'un réseau privé à partir d'un autre réseau. Par exemple, les tunnels sécurisés VPN (Virtual Private Network). Une autre solution couramment utilisée consiste à faire appel à une architecture IMS (IP Multimedia Subsystem).

Ces solutions à base de tunnel VPN ou architecture IMS existantes sont relativement lourdes et complexes à mettre en oeuvre. En outre, avec les solutions à base de tunnel VPN, des problèmes de conflit d'adresses se posent. Les architectures IMS ne sont pas forcément mises à disposition librement des utilisateurs du grand public.

Or, dans le domaine grand public, le protocole UPNP s'impose comme un standard pour le partage, la diffusion et le contrôle des contenus numériques. Aujourd'hui, différents équipements conformes au standard UPNP (Universal Plug and Play) se répandent dans les foyers, et en particulier dans le domaine du multimédia avec les Media Servers (nommés par exemple TwonkyMedia, Windows Media Player 11, ...), les Media Renderers (STB, DMA audio, IP-Radio, ...), et les Media Players (consoles de jeux, des cadres photo numériques, ...).

### 2 SOLUTIONS DE L'ART ANTERIEUR

Un des problèmes du protocole UPnP est lié à la difficulté de partager des contenus en dehors du réseau d'origine. Par exemple, il est difficile de partager du contenu qui se trouve sur un premier réseau avec un deuxième réseau.

Le document GB2445791 décrit une solution qui permet de partager des contenus entre deux réseaux UPnP : un réseau public et un réseau privé. La méthode du document GB2445791 permet de relier différents réseaux UPnP en utilisant XMPP (de l'anglais « Extensible Messaging and Présence Protocol ») pour encapsuler et relayer des messages de protocole UPnP entre les réseaux. Le protocole XMPP est utilisé pour encapsuler et relayer des messages de protocole UPnP entre un premier réseau (par exemple un réseau domestique) et un réseau privé de façon à permettre aux dispositifs et aux contenus du premier réseau d'être accessible à partir du réseau privé.

Cette solution n'est cependant pas aisée à mettre en oeuvre. Elle oblige de plus à disposer d'un serveur complémentaire qui permet de faire le lien entre les deux réseaux. De plus, elle n'apporte aucune solution en termes de sécurité ou de sélection des données à échanger.

### 3 RESUME DE L'INVENTION

L'invention ne pose pas ces problèmes des solutions de l'art antérieur.

En effet, l'invention concerne un procédé d'interfaçage selon la revendication 1.

Ainsi, l'invention permet de simuler la présence d'une première entité au sein du deuxième réseau, sans que cette première entité soit réellement connectée à ce deuxième réseau.

Selon un mode de réalisation particulier, le procédé d'interfaçage comprend une étape d'émission, par le module mandataire via le deuxième réseau, d'un message à destination de la deuxième entité lors de la procédure de découverte dans le deuxième réseau. Le module mandataire est configuré pour dialoguer avec la deuxième entité lors de la procédure de découverte dans le deuxième réseau : ainsi la deuxième entité détecte la présence du module mandataire simulant la présence de la première entité. Une mise en relation par l'intermédiaire du module mandataire est donc possible après cette détection.

Selon un mode de réalisation particulier, la première entité est connectée à ladite passerelle via une première interface réseau et la deuxième entité est connectée à ladite passerelle via une deuxième interface réseau, distincte de la première interface et réservée aux entités connectées au deuxième réseau et le procédé comprend :
- une étape de réception, par le module mandataire, en provenance de la deuxième entité via la deuxième interface et via le deuxième réseau, d'une commande conforme audit protocole ; et
- une étape de transmission, par le module mandataire via la première interface et via le premier réseau, de ladite commande, à la première entité.

Ainsi, l'invention permet d'utiliser des modules mandataires pour relayer les commandes (requêtes / messages) aux entités destinatrices de ces commandes dans le premier réseau.

Selon un mode de réalisation particulier lequel ledit message est un message de recherche d'entités présentant une interface de communication conforme audit protocole et le procédé comprend une étape de transmission, à la deuxième entité, d'un identifiant dudit module mandataire et d'une description d'au moins un service mis en oeuvre par la première entité.

Ainsi, cette technique permet de partager facilement et simplement des contenus entre des utilisateurs au sein d'un réseau domestique tout en préservant la sécurité et la confidentialité des données selon les règles définies par les utilisateurs.

Selon une caractéristique particulière, l'étape d'activation du module mandataire est destinée à être mise en oeuvre si la première entité appartient à un ensemble d'entités auquel une entité du deuxième réseau est autorisée à accéder.

Ainsi, il est possible de sélectionner les entités que l'on souhaite partager.

Selon une caractéristique particulière, l'étape d'activation du module mandataire est mise en oeuvre suite à une réception d'un message d'annonce indiquant la présence de la première entité dans le premier réseau.

Selon une caractéristique particulière ledit procédé comprend :
- une étape de réception, par le module mandataire, en provenance de la deuxième entité via la deuxième interface et le deuxième réseau, d'une commande conforme audit protocole ; et
- une étape de transmission, par le module mandataire, de ladite commande, à la première entité via la première interface et le premier réseau.

Selon une caractéristique particulière, ledit procédé comprend :
- une étape de traduction, par le module mandataire, d'au moins une adresse de contenu référencé par la première entité, de sorte que l'adresse traduite désigne le module mandataire comme entité auprès de laquelle ledit contenu est susceptible d'être obtenu ; et
- une étape de transmission de l'adresse traduite à la deuxième entité.

Selon une caractéristique particulière, le module mandataire simule la présence dans le deuxième réseau d'un serveur de contenus référençant un ensemble de contenus référencés par plusieurs serveurs de contenus du premier réseau.

Selon une caractéristique particulière, ledit procédé comprend une étape d'agrégation par le module mandataire des métadonnées des contenus référencés par lesdits serveurs de contenus du premier réseau.

Selon un autre aspect, l'invention concerne également un système d'interfaçage selon la revendication 11.

Selon un mode de réalisation particulier, la première entité est connectée à ladite passerelle via une première interface réseau et la deuxième entité est connectée à ladite passerelle via une deuxième interface réseau, distincte de la première interface et réservée aux entités connectées au deuxième réseau, le système étant caractérisé en ce qu'il comprend :
- des moyens de réception, par le module mandataire, en provenance de la deuxième entité via la deuxième interface et via le deuxième réseau, d'une commande conforme audit protocole ; et
- des moyens de transmission, par le module mandataire via la première interface et via le premier réseau, de ladite commande, à la première entité.

Selon un autre aspect, l'invention concerne également une passerelle résidentielle qui comprend un comprend un système tel que préalablement décrit.

Les différents modes de réalisation mentionnés ci-dessus sont combinables entre eux pour la mise en oeuvre de l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code obj et, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une architecture d'un système selon l'invention ;

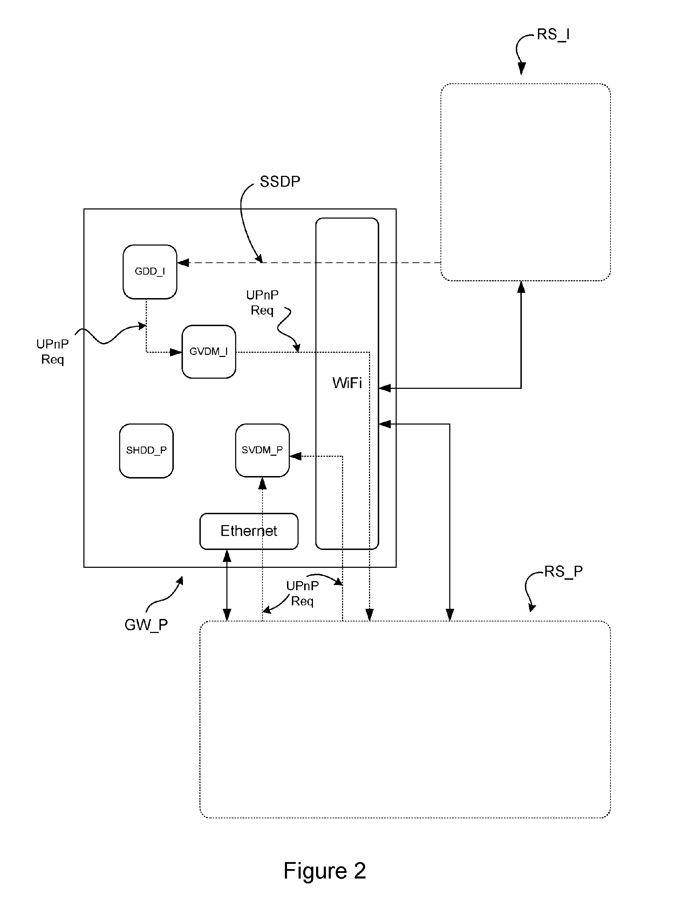

- la figure 2 illustre les modules contenus dans une passerelle résidentielle telle que présentée en figure 1 ;
- la figure 3 décrit la génération des mandataires dans le réseau invité ;
- la figure 4 décrit une utilisation d'un mandataire par un dispositif UPnP dans le réseau invité ;
- la figure 5 illustre schématiquement l'architecture physique d'une passerelle résidentielle.

### 5 DESCRIPTION DETAILLEE DE L'INVENTION

### 5.1 Rappel du principe de l'invention

L'invention est décrite plus en détail dans le cas de son application au partage sélectif de contenus, localisées dans un premier réseau, dit réseau privé, pour un équipement d'un deuxième réseau, dit réseau invité, distinct de ce réseau privé. L'invention vient résoudre un problème bloquant apparaissant lorsque le propriétaire d'un réseau privé souhaite sélectionner les contenus disponibles par l'intermédiaire d'entités à partager avec d'autres utilisateurs qui peuvent être amenés à se connecter au réseau invité de l'utilisateur à l'aide d'un terminal par exemple.

Les entités sont par exemple des entités pilotables au moyen du protocole UPnP. L'invention permet notamment de piloter des d'entités UPnP d'un réseau privé à partir d'un réseau invité, et ce, comme si cette entité privée faisait partie du réseau invité, et de manière transparente pour un utilisateur du réseau invité, et vice versa.

L'invention prévoit en effet une extension du mécanisme de commande UPnP, en apportant la possibilité de piloter des d'entités UPnP d'un réseau privé à partir d'un réseau invité, et vice versa. De ce fait, l'invention remédie à une limitation inhérente au protocole UPnP, tel que prévu dans le standard UPnP, qui ne permet actuellement, à partir d'un équipement d'un réseau invité, que la commande d'entités UPnP de ce même réseau invité.

A titre d'exemple, l'invention est applicable à la restitution, par un dispositif de restitution d'un réseau invité, de contenus référencés par un serveur de contenu d'un réseau privé ainsi qu'à la restitution, par un dispositif de restitution d'un réseau privé, de contenus référencés par un serveur de contenu d'un réseau invité. Ces contenus sont par exemple des contenus multimédia (vidéo et / ou morceaux de musique et/ou images).

Le serveur de contenus est par exemple un serveur de contenus conforme au standard UPnP (Universal Plug and Play). Un tel serveur de contenu est nommé "Digital Media Server" (DMS) dans le contexte de l'architecture UPnP. Le dispositif de restitution est par exemple un dispositif de restitution conforme au standard UPnP (Universal Plug and Play). Un tel dispositif de restitution est nommé "Digital Media Renderer" (DMR) dans le contexte de l'architecture UPnP.

Dans le contexte de ce document, une entité est dite entité UPnP si elle est conforme au standard UPnP ou à un autre standard équivalent ou dérivé, notamment si elle utilise un protocole de commande conforme à un tel standard.

Le mécanisme proposé par l'invention est en outre transposable à d'autres protocoles, servant à la commande d'entités d'un réseau, par exemple le protocole "BONJOUR".

L'invention est également applicable à la commande à distance d'autres types d'entités conformes au standard UPnP, notamment à la commande de dispositifs nommés "Digital Media Printer".

Le standard UPnP fournit des mécanismes et une architecture permettant une mise en relation, de type réseau de pairs, entre les entités UPnP. Chaque entité UPnP peut être intégrée physiquement dans un des terminaux du réseau privé ou encore dans un équipement de type passerelle d'interconnexion (Gateway), set-top-box (STB), routeur ou serveur de stockage de type NAS (Network Attached Storage), etc. Les mécanismes de communication prévus dans le standard UPnP sont conçus pour permettre une interopérabilité entre les entités UPnP. Le protocole UPnP utilise notamment les protocoles TCP/UDP/IP (Transmission Control Protocol/User Datagram Protocol/Internet Protocol) pour le transport des requêtes UPnP.

Dans le contexte de ce document, une entité est dite entité UPnP si elle est conforme au standard UPnP ou à un autre standard équivalent ou dérivé, notamment si elle utilise un protocole de commande conforme à un tel standard.

Le mécanisme proposé par l'invention est en outre transposable à d'autres protocoles, servant à la commande d'entités d'un réseau, par exemple le protocole "B ONJOUR" .

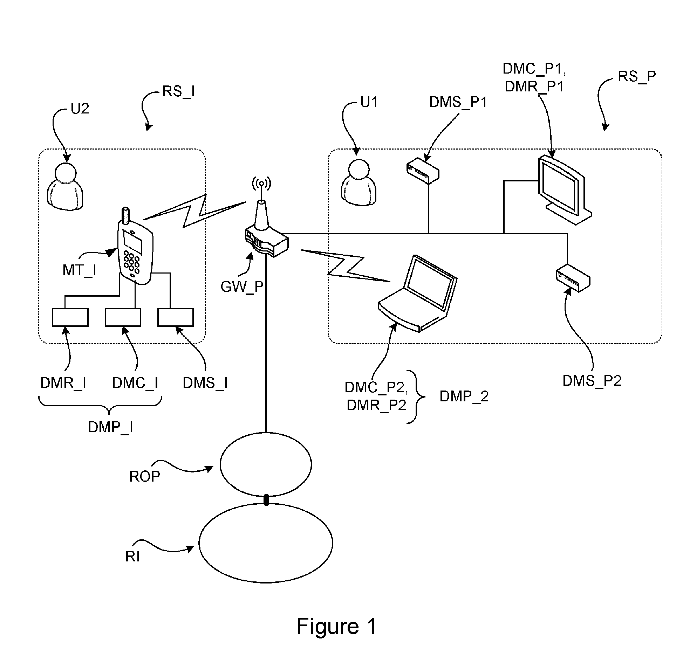

Le système représenté à la figure 1 est organisé autour de deux réseaux RS_P et RS_I. Le réseau privé RS_P et le réseau invité RS_I sont supposés appartenir à un utilisateur U1 qui a préalablement configuré ces deux réseaux, par l'intermédiaire par exemple d'une passerelle résidentielle. Dans ce mode de réalisation, tel que présenté en relation avec la figure 1, le réseau privé RS_P est un réseau hétérogène (mettant en oeuvre une pluralité de technologies de connexion : WiFi, Ethernet, CPL) et le réseau invité RS_I est un réseau WiFi qui permet aux invités de l'utilisateur U1 d'avoir accès au réseau Internet, par exemple.

Cet exemple de système comprend en outre les entités suivantes:
- un équipement MT_I de l'utilisateur U2, sous forme par exemple de terminal mobile;
- une passerelle résidentielle GW_P, servant de passerelle d'accès aux réseaux RS_P, RS_I, cette passerelle réalisant l'interconnexion des équipements connectés à l'un de ces réseaux avec un réseau étendu RI, via un réseau ROP d'un opérateur, fournisseur d'accès au réseau étendu RI,
- des serveurs de contenus DMS_P1, DMS_P2 conformes au standard UPnP, connectés au réseau RS_P ;
- un serveur de contenus DMS_I1, conformes au standard UPnP, connecté au réseau RS_I ;
- des dispositifs de restitution de contenus DMR_P1, DMR_P2, DMR_I, conformes au standard UPnP, connectés respectivement aux réseaux RS_P, RS_I;
- des points de contrôle DMC_P1, DMC_I1, conformes au standard UPnP, connectés respectivement aux réseaux RS_P, RS_I.

Les réseaux RS_I et RS_P sont ainsi interconnectés entre eux par la passerelle GW_P : celle-ci est apte à communiquer à la fois via le réseau invité RS_I au moyen d'une première interface réseau et via le réseau privé RS_P au moyen d'une deuxième interface réseau.

Le suffixe P ou I ajouté à une référence d'un module ou entité est ainsi utilisé pour préciser la localisation de chaque module : suffixe P si le module appartient au réseau RS_P, suffixe I s'il appartient au réseau de RS_I. Dans le contexte de l'invention, il est supposé, par souci de simplification de l'exposé, que deux modules de même référence (DMC_, DMR_, DMS_, etc) mais de suffixes différents (P ou I) sont identiques fonctionnellement, en ce qu'ils jouent le même rôle vis-à-vis des entités du réseau auquel ils appartiennent respectivement.

### Serveurs de contenus

Chacun des serveurs de contenus DMS_P1, DMS_P2, DMS_I est un serveur de contenus conforme au standard UPnP, ou "Digital Media Server" (DMS). En conséquence, il présente une interface de commande conforme au standard UPnP et est pilotable uniquement au moyen de requêtes UPnP.

L'envoi d'une requête UPnP est réalisé usuellement au moyen de requêtes de type SOAP permettant d'invoquer une fonction de type Web service via une interface logicielle de programmation (API, Application Programming Interface) de l'entité destinataire, représentant un "service UPnP".

### Dispositifs de restitutions

Chacun des dispositifs de restitutions DMR_P, DMR_I est un dispositif de restitution conforme au standard UPnP, ou "Digital Media Renderer" (DMR).

En conséquence, il présente une interface de commande conforme au standard UPnP et est pilotable uniquement au moyen de requêtes UPnP.

### Points de contrôle UPnP

Chacun des points de contrôle UPnP DMC_P, DMC_I est conforme au standard UPnP, ou DMC, Digital Media Controller. Il est conçu notamment pour envoyer des requêtes UPnP à tous les dispositifs UPnP présents dans le réseau auquel il appartient. Ces requêtes sont notamment les requêtes UPnP nommées "Browse" de consultation du répertoire de contenus (CDS, Content Directory Service) d'un serveur de contenu UPnP ou des requêtes UPnP nommées "SetAVTransportURI" ou "Play" pour piloter la restitution d'un contenu sur un dispositif de restitution UPnP de type DMR (Digital Media Renderer).

### Passerelle résidentielle

Les fonctions de la passerelle GW_P, vis-à-vis des entités du réseau RS_P et des entités du réseau RS_I sont décrites ici en détail.

La passerelle GW_P est une passerelle pour l'interconnexion du réseau RS_P avec le réseau Internet RI via le réseau ROP d'un fournisseur d'accès. Elle permet aux terminaux du réseau RS_P d'accéder au réseau Internet RI.

Elle permet également de définir et de configurer un réseau invité RS_I qui est utilisé par les invités (par exemple U2) de l'utilisateur U1 pour se connecter par exemple au réseau Internet RI. Selon l'invention, comme exposé ci-après, la passerelle comprend en outre des moyens permettant un accès à au moins certains contenus disponibles au travers du réseau privé RS_P de l'utilisateur U1 à partir d'un terminal mobile, connecté localement à la passerelle GW_P et mettant en oeuvre une entité UPnP.

Cette connexion locale est effectuée via une liaison locale de communication, par exemple une liaison Wifi, la passerelle intégrant dans ce but la fonction de point d'accès WiFi.

De manière connue, un réseau Wifi est caractérisé par un nom, désigné dans le standard par un identifiant SSID (Service Set Identifier). Selon les capacités matérielles et logicielles de l'équipement jouant le rôle de point d'accès, il est en outre possible de définir plusieurs réseaux sans fil, donc de déclarer plusieurs identifiants SSID de réseau sans fil.

C'est le cas par exemple pour le WiFi communautaire. Les opérateurs permettent à leurs abonnés de partager leur bande passante pour l'accès à Internet avec d'autres clients de l'opérateur. Ainsi un réseau WiFi dédié à "la communauté" possède un SSID particulier, par exemple "WiFi communautaire ", et les abonnés souhaitant se connecter sur ce réseau doivent saisir un couple identifiant / mot de passe propre à ce réseau.

Les accès WiFi peuvent en outre être sécurisés par une clé (WEP, WPS, ... selon la norme utilisée) à saisir au moment de la connexion d'un terminal au point d'accès WiFi.

Dans l'exemple de réalisation décrit, on suppose que la passerelle domestique GW_P intègre un point d'accès Wifi et est dotée de plusieurs interfaces réseau (WiFi et Ethernet), une de ces interfaces Wifi étant dédiée à un réseau invité, un identifiant SSID particulier étant affectée à cette interface WiFi.

On comprend ainsi que, du fait de l'utilisation de deux interfaces de connexion distinctes (par exemple, deux interfaces Wifi), une séparation matérielle est réalisée entre les deux réseaux : une entité connectée au réseau invité ne peut communiquer avec une entité connectée au réseau privé, si ce n'est au travers de la passerelle résidentielle GW_P. Cette passerelle, accédant à la fois au réseau privé et au réseau invité, peut donc être utilisée pour réaliser l'interfaçage entre deux entités, l'une dans le réseau invité, l'autre dans le réseau privé.

Elle est en outre apte à mettre en oeuvre une procédure de découverte d'entités UPnP dans chacun de ces deux réseaux. Ceci n'est possible que parce que cette passerelle fait partie à la fois du réseau privé et du réseau invité et qu'elle peut donc émettre ou recevoir des messages SSDP (Simple Service Discovery Protocol) en mode « multicast » dans ces deux réseaux. On comprend ainsi comment est surmontée la limitation inhérente au protocole UPnP, tel que prévu dans le standard UPnP, qui ne permet actuellement, à partir d'un équipement d'un réseau local donné, que la commande d'entités UPnP de ce même réseau local.

La communication avec le réseau privé est permise grâce au procédé d'interfaçage selon l'invention qui sera décrit plus en détail ci-dessous. Les messages reçus via l'interface réseau dédiée au réseau invité sont traités conformément au procédé selon l'invention et ne sont pas relayés de manière "automatique", comme cela est connu de l'art antérieur, vers les autres interfaces réseau de la passerelle. Il est ainsi possible de contrôler vers quelles entités UPnP du réseau privé sont routés les messages provenant du réseau invité et quelles sont les entités UPnP du réseau privé qui exposées dans le réseau invité, c'est-à-dire qui sont accessibles à partir du réseau invité.

La passerelle GW_P comprend en outre des modules d'interconnexion mettant en oeuvre, selon l'invention, les fonctions de partage sélectif entre le réseau privé RS_P et le réseau invité RS_I et vice versa. Ces modules d'interconnexion constituent une interface UPnP entre le réseau prive RS_P et le réseau invité RS_I.

### Fonctions des modules d'interconnexion

Les modules d'interconnexion de la passerelle GW_P, qui constitue l'interface UPnP entre le réseau prive RS_P et le réseau invité RS_I, sont les suivants :
- un module de découverte de dispositifs UPnP invités ou « Guest Device Discovery » GDD_I en charge de découvrir les dispositifs UPnP du réseau invité RS_I ; il met en oeuvre une procédure de découverte conforme à celle prévue dans la norme UPnP / DLNA ;
- un module de découverte de dispositifs UPnP privés ou « Suscriber Home Device Discovery » SHDD_P en charge de la découverte des dispositifs UPnP du réseau privé RS_P ; il met en oeuvre une procédure de découverte conforme à celle prévue dans la norme UPnP / DLNA ;
- un module d'émulation de modules UPnP mandataires privés ou « Subscriber Virtual Device Manager » SVDM_P, associé au module de découverte SHDD_P et en charge d'émuler des dispositifs UPnP du réseau privé RS_P, de manière à simuler la présence dans le réseau invité RS_I d'un dispositif UPnP du réseau privé RS_P ;
- un module d'émulation de modules UPnP mandataires invités « Guest Virtual Device Manager » GVDM_I, associé au module de découverte GDD_I et en charge d'émuler des dispositifs UPnP du réseau invité RS_I, de manière à simuler la présence dans le réseau privé RS_P d'un dispositif UPnP du réseau invité RS_I.

Les deux modules d'émulation de dispositifs (SVDM_P et GVDM_I) permettent de déclencher l'exécution d'un module logiciel mandataire, servant de représentant dans un des réseaux RS_P, RS_I d'au moins un des dispositifs UPnP de l'autre réseau. Le module d'émulation SVDM_P est capable de déclencher l'exécution d'autant de modules mandataires que de dispositifs UPnP connectés au réseau privé RS_P auquel l'utilisateur U1 a choisi d'autoriser l'accès via le réseau invité RS_I.

Chaque module mandataire, qui représente au moins un dispositif UPnP du réseau privé RS_P, simule la présence dans le réseau invité RS_I de ce dispositif UPnP. En particulier, chaque module mandataire présente une interface de commande UPnP, conforme à celle présentée par le dispositif UPnP qu'il représente, interface de commande via laquelle il peut recevoir d'un dispositif UPnP connecté au réseau invité RS_I des commandes et/ou réponses UPnP ou, inversement, émettre à destination d'un dispositif UPnP connecté au réseau invité, des commandes et/ou réponse UPnP. A réception d'une commande UPnP provenant d'un dispositif UPnP connecté au réseau invité RS_I, le module mandataire transmet cette commande au dispositif UPnP du réseau privé représenté par ce module mandataire. Inversement, à réception d'une réponse UPnP provenant d'un dispositif UPnP du réseau privé RS_P, le module mandataire transmet cette réponse au dispositif UPnP connecté au réseau invité RS_I émetteur de la commande.

Symétriquement, chaque module mandataire, qui représente au moins un dispositif UPnP connecté au réseau invité RS_P, simule la présence dans le réseau privé RS_I de ce dispositif UPnP. En particulier, chaque module mandataire présente une interface de commande UPnP, conforme à celle présentée par le dispositif UPnP qu'il représente, interface de commande via laquelle il peut recevoir d'un dispositif UPnP du réseau privé RS_P des commandes / réponses UPnP ou, inversement, émettre à destination d'un dispositif UPnP connecté au réseau privé, des commandes et/ou réponse UPnP. A réception d'une commande UPnP provenant d'un dispositif UPnP du réseau privé RS_P, le module mandataire transmet cette commande au dispositif UPnP connecté au réseau invité représenté par ce module mandataire. Inversement, à réception d'une réponse UPnP provenant d'un dispositif UPnP connecté au réseau invité RS_I, le module mandataire transmet cette réponse au dispositif UPnP du réseau privé RS_P émetteur de la commande.

Les modules de découverte (GDD_I et SHDD_P) notifient leur modules d'émulation de dispositif associé (GVDM_I pour GDD_I et SVDM_P pour SHDD_P) de la présence / l'absence / de l'apparition / de la disparition dans un des réseaux RS_P, RS_I de dispositifs UPnP et les modules d'émulation de dispositifs (SVDM_P et GVDM_I) déclenchent l'exécution / l'exécution / l'arrêt / l'activation / désactivation de modules mandataires correspondants aux dispositifs UPnP détectés.

Plus particulièrement, le module « Guest Device Discovery » GDD_I reçoit les messages d'annonce SSDP signalant la présence / l'apparition d'un dispositif UPnP connecté au réseau invité, c'est-à-dire les messages d'annonce SSDP reçus via l'interface réseau dédiée au réseau invité. Il s'agit d'un message d'annonce SSDP de type "SSDP:alive".

Le module « Guest Device Discovery » GDD_I reçoit également les messages d'annonce SSDP signalant l'absence / la disparition d'un dispositif UPnP connecté au réseau invité, c'est-à-dire les messages d'annonce SSDP reçus via l'interface réseau dédiée au réseau invité. Il s'agit d'un message d'annonce SSDP SSDP de type "SSDP:byebye".

La disparition d'un dispositif UPnP peut également être détectée si le message d'annonce de type "SSDP:alive" émis par un dispositif UPnP comporte une durée d'expiration ("timeout") au bout de laquelle un nouveau message de type "SSDP:alive" doit être réémis et qu'un tel nouveau message n'est pas reçu. Dans une telle situation, le dispositif UPnP doit en effet envoyer un message "SSDP:alive" de manière périodique, et s'il ne l'envoie plus au bout d'une période définie, le module de découverte considère que le dispositif UPnP a disparu du réseau / est absent.

Pour chaque dispositif UPnP ainsi détecté dans le réseau invité, le module d'émulation de dispositif « Guest Virtual Device Manager » (GVDM_I) active ou instancie un module mandataire correspondant, simulant la présence dans le réseau privé RS_P du dispositif UPnP détecté.

Les modules « Subscriber Virtual Device Manager » (SVDM_P) et « Subscriber Home Device Discovery » (SHDD_P) suivent le même schéma de principe dans les réseaux correspondants. En particulier, le module « Subscriber Home Device Discovery » (SHDD_P) reçoit, sur toutes les interfaces réseau de la passerelle sauf l'interface dédiée au réseau invité RS_I, les messages d'annonce SSDP signalant la présence / l'apparition d'un dispositif UPnP connecté au réseau privé. Pour chaque dispositif UPnP ainsi détecté dans le réseau privé, le module d'émulation de dispositif « Suscriber Virtual Device Manager » (SVDM_I) active ou instancie un module mandataire correspondant, simulant la présence dans le réseau invité RS_I du dispositif UPnP détecté.

Le module « Subscriber Virtual Device Manager » (SVDM_P) est doté d'un module de configuration avec une base de données ou un fichier de configuration permettant de lister les dispositifs UPnP en accès partagé, à émuler dans le réseau invité (RS_I), c'est-à-dire la liste des dispositifs UPnP auxquels un dispositif UPnP du réseau invité RS_I est autorisé à accéder.

Cette base de données ou ce fichier de configuration est, comme cela est présenté par la suite, utilisé par l'utilisateur U1 pour configurer les accès aux contenus disponibles sur le réseau invité RS_I par l'intermédiaire du réseau privé RS_P.

Dans ce qui vient d'être décrit, une entité UPnP (entité esclave) s'annonce spontanément dans le réseau auquel elle appartient : pour cela, cette entité UPnP émet en mode « multicast » un message « SSDP:alive » et l'entité UPnP (entité maître, Control Point, DMC ou DMP), contenant le module de découverte et qui souhaite dialoguer avec elle, lui envoie un message en retour pour obtenir une description des services et propriétés de l'entité UPnP qui s'est annoncée.

En alternative, de manière connue, la découverte d'une entité UPnP dans un réseau (que ce soit le réseau privé ou invité) peut être réalisée en effectuant une recherche d'entités UPnP. Dans cette alternative, l'entité UPnP contenant le module de découverte initie la procédure de découverte en envoyant en mode « multicast » un message de recherche d'entités (« SSDP "M-SEARCH ») auquel répond par un message chaque entité UPnP vérifiant le ou les critères de recherche définis dans le message de recherche. Cette alternative évite d'avoir à attendre l'émission spontanée de message « SSDP:alive » : elle est donc appropriée lorsqu'une entité UPnP se connecte au réseau invité et qu'on souhaite détecter dès sa connexion la présence des entités UPnP de ce réseau invité. Dans cette alternative, l'instanciation des modules mandataires pour les entités du réseau privé (voire même la procédure de découverte d'entités UPnP dans ce réseau privé) peut être effectuée seulement après réception d'un tel message « SSDP "M-SEARCH », afin d'éviter la consommation inutile des ressources de la passerelle en l'absence d'entité connectée dans le réseau invité. Le message « SSDP "M-SEARCH » sera réceptionné et conservé temporairement par un module adapté de la passerelle puis transmis aux modules mandataires instanciés en vue d'une réponse éventuelle de leur part.

Ainsi la séquence d'envoi de messages pendant la procédure de découverte dépend de l'alternative de réalisation choisie.

### Cas particulier des serveurs de contenus du réseau privé (RS_P)

Selon un mode de réalisation particulier de l'invention, Il est possible de préciser les répertoires (containers) à partager dans le réseau invité.

Selon un mode de réalisation particulier, un seul module mandataire est utilisé pour représenter dans le réseau invité RS_I plusieurs serveurs de contenus UPnP du réseau privé. Un tel module mandataire est adapté pour agréger les métadonnées des contenus référencés par les serveurs de contenus (DMS_P1 & DMS_P2 par exemple) qu'il représente. L'agrégation de métadonnées aboutit à un ensemble de métadonnées présentant une arborescence unique de contenus, c'est-à-dire représentant un unique répertoire de contenus (CDS, Content Directory Service).

Lorsque ces métadonnées comprennent des adresses URI de contenus, la traduction de ces adresses est opérée avant ou après agrégation par le module mandataire.

### 5.2 Description d'un mode de réalisation

On présente dans ce mode de réalisation, la mise en oeuvre du système selon l'invention tel qu'il a été préalablement décrit.

### Configuration du partage

De manière à ce qu'un utilisateur du réseau privé RS_P puisse contrôler quels sont les contenus partagés avec un dispositif relié au réseau invité, l'invention met en oeuvre une interface utilisateur de configuration qui offre la possibilité de sélectionner les contenus à partager. Cette sélection est effectuée par exemple au cours d'une phase de configuration du système de l'invention. Cette phase de configuration comprend, pour chaque dispositif UPnP à même de délivrer du contenu (pour tous les serveurs de contenus du réseau de l'utilisateur), une étape de mise en oeuvre, au sein de l'interface utilisateur, de moyens de sélection de cette entité UPnP, et pour cette entité sélectionnée, une étape de mise en oeuvre, au sein de l'interface utilisateur, de moyens de sélection d'un ou plusieurs répertoires à partager et/ou une étape de sélection d'un ou plusieurs types de contenu à partager.

Par exemple, cette phase de configuration peut conduire un utilisateur à sélectionner, pour un serveur de contenu DMS donné du réseau privé RS_P, un répertoire contenant des contenus et à sélectionner uniquement les contenus musicaux. Ainsi seuls les contenus musicaux du répertoire sélectionné seront partagés.

### Mise en oeuvre de l'interfaçage et du partage

Ce procédé d'interfaçage permet l'interfaçage d'au moins une première entité d'un premier réseau avec une deuxième entité d'un deuxième réseau interconnecté avec le premier réseau via une passerelle, les première et deuxième entités présentant une interface de communication conforme à un protocole de commande. Le procédé d'interfaçage est mis en oeuvre par la passerelle et comprend :
- une étape de réception d'un message émis via le deuxième réseau par la deuxième entité lors de la mise en oeuvre d'une procédure de découverte d'entités présentant une interface de communication conforme audit protocole;
- une étape d'activation d'un module mandataire, apte à communiquer via le deuxième réseau avec la deuxième entité conformément audit protocole de commande et simulant la présence au sein du deuxième réseau d'au moins une première entité du premier réseau.

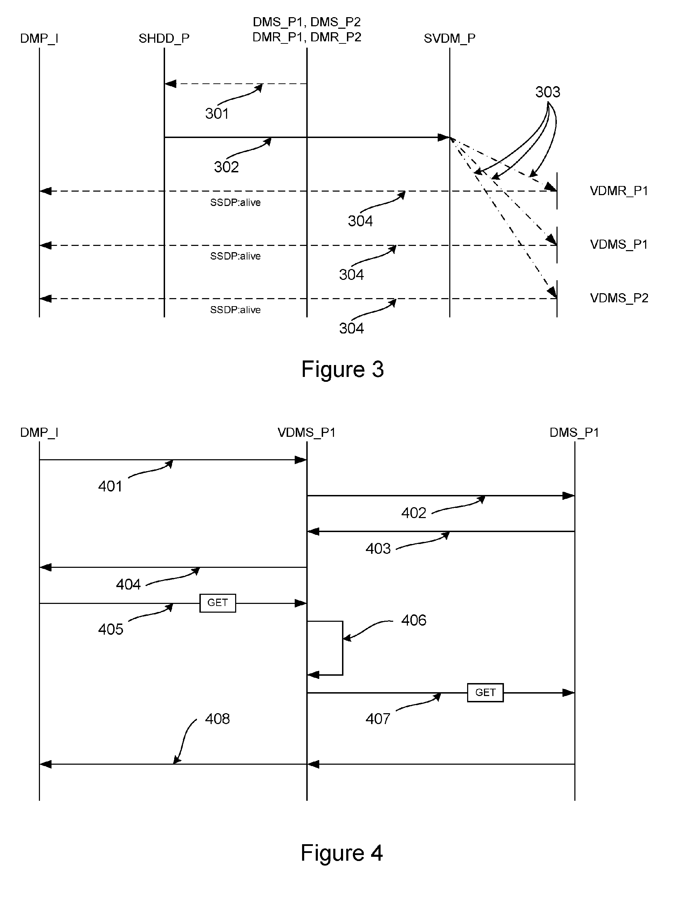

On détaille ci-après, en relation avec les figures 3 et 4, les mécanismes mis en oeuvre dans ce mode de réalisation de l'invention. On suppose que l'utilisateur U2 rend visite à un utilisateur U1. Le réseau domestique de l'utilisateur U1 comporte deux serveurs de contenus DMS_P1 et DMS_P2, et deux dispositifs de restitution DMR, DMR_P1 et DMR_P2. L'utilisateur U2 utilise un terminal mobile comportant un point de contrôle noté DMC_I et un serveur de contenus noté DMS_I.

La passerelle résidentielle GW_P de U1 présente une première interface de connexion pour la connexion d'équipements au réseau invité RS_I et une deuxième interface de connexion pour la connexion d'équipements au réseau privé RS_P.

On considère le cas où l'utilisateur U1 souhaite partager uniquement ses musiques avec l'utilisateur U2. L'utilisateur U2 connecte son terminal mobile au réseau invité via la première interface de connexion.

La première phase, consistant en la création des mandataires, est représentée à la figure 3. Les étapes mises en oeuvre par le système pour créer les modules mandataires dans le réseau invité sont les suivantes:
1. A l'étape 301, le module de découverte « Subscriber Home Device Discovery » (SHDD_P) intercepte les messages d'annonce SSDP provenant des dispositifs UPnP du réseau privé RS_P. Par conséquent il détecte la présence dans le réseau privé RS_P des dispositifs DMS_P1, DMS_P2, DMR_P1 et DMR_P2.
   Dans une variante de réalisation, le module de découverte SHDD_P envoie un message SSDP (de type "m-search") de recherche de dispositifs UPnP présents dans le réseau privé RS_P. Ce message de recherche est par exemple émis à l'initialisation du module de découverte SHDD_P qui attend ensuite de recevoir une réponse, sous forme de message d'annonce SSDP, à ce message de recherche.
2. A l'étape 302, le module de découverte « Subscriber Home Device Discovery » (SHDD_P) informe le module d'émulation « Subscriber Virtual Device Manager » SVDM_P de la présence des différents dispositifs UPnP pour lesquels un message d'annonce SSDP a été reçu à l'étape 301.
3. A l'étape 303, le module d'émulation « Subscriber Virtual Device Manager » SVDM_P utilise son module de configuration (et la base de données de configuration ou le fichier de configuration attaché) pour déterminer quels sont les dispositifs et contenus à exposer, c'est-à-dire à rendre accessibles via le réseau invité RS_I. Dans le fichier de configuration, chaque dispositif UPnP à exposer est identifié par son identifiant UDN (Unique Device Name). A titre d'exemple, supposons que l'utilisateur U1 souhaite rendre accessible son dispositif de restitution DMR_P1 et les contenus musicaux des serveurs de contenus DMS_P1 et DMS_P2. Le « Subscriber Virtual Device Manager » SVDM_P instancie deux modules mandataires :
   a. Le dispositif de restitution mandataire VDMR_P1
   b. Les serveurs de contenus mandataire VDMS_P1 et VDMS_P2
      La description XML d'un dispositif UPnP représenté et de ses services est stockée par le module mandataire représentant ce dispositif invité pour assurer cette fonction d'interface entre les deux réseaux RS_P et RS_I.
4. A l'étape 304, les modules mandataires VDMS_P1, VDMS_P2, VDMR_P1 s'annoncent sur le réseau invité RS_I en envoyant des messages d'annonce « SSDP:alive », reçus par le dispositif UPnP du terminal de l'utilisateur U2. Chaque module mandataire est apte à communiquer via le réseau invité RS_I avec les entités connectées à ce réseau invité RS_I. L'interfaçage des dispositifs du réseau est donc effectué, en ce qu'un dispositif UPnP invité, connecté au réseau invité, est susceptible de dialoguer avec un dispositif UPnP privé, connecté au réseau privé, par l'intermédiaire du module mandataire représentant ce dispositif UPnP privé et servant de relais de communication entre le dispositif UPnP invité, connecté au réseau invité et le dispositif UPnP privé, connecté au réseau privé.

Quand un dispositif UPnP se déconnecte du réseau privé, un message d'annonce "SSDP:byebye" est émis par ce dispositif UPnP et reçu par le module de découverte SHDD_P. Le module de découverte SHDD_P notifie le module d'émulation SVDM_P correspondant de la même manière. Le module d'émulation SVDM_P désactive alors le module mandataire qui représente le dispositif UPnP déconnecté. Le module de découverte SHDD_P émet en outre un message d'annonce "SSDP:byebye" à travers le réseau invité RS_I, de manière à ce que les dispositifs UPnP connectés à ce réseau invité soient informés de l'absence du dispositif UPnP du réseau privé.

La deuxième phase, le partage des contenus, est représentée à la figure 4.

Quand l'utilisateur U2 se connecte au réseau « WiFi » invité et utilise son dispositif de restitution pour accéder aux dispositifs UPnP connectés au réseau privé, les requêtes provenant du point de contrôle DMC_I de l'utilisateur sont transmises via l'interface réseau invité de la passerelle GW_P. Les requêtes sont interprétées par les modules mandataires activés précédemment. Ainsi, le dispositif de restitution DMP_I ne peut accéder qu'aux serveurs de contenus DMS_P1 et DMS_P2 (répertoire « Music ») et au dispositif de restitution DMR_P1 via leurs modules mandataires VDMR_P1, VDMS_P1 et VDMS_P2 correspondants.

Selon l'invention, les modules mandataires sont en charge de relayer les requêtes vers les dispositifs UPnP reçues vers les dispositifs UPnP qu'ils représentent respectivement. Les modules mandataires sont en outre responsables de l'adaptation des URLs des métadonnées des contenus référencés par un dispositifs UPnP représenté. En d'autres termes, les dispositifs virtuels n'effectuent pas les actions UPnP, mais se chargent de les relayer aux dispositifs UPnP représentés qui se trouvent dans le réseau privé RS_P.

Par exemple, un contenu multimédia (media item) référencé par un dispositif UPnP connecté au réseau privé par une adresse URI_P dans le réseau privé doit être référencé dans le réseau invité avec une autre URI_I qui est constituée comme suit:
URI_I : http://<VDMS_P IP address>:<VDMS_P port>/content/URI_P

Cette adresse de substitution désigne le module mandataire, représentant du dispositif UPnP connecté au réseau privé, comme entité auprès de laquelle le contenu peut être obtenu. Cette adresse comporte: l'adresse IP de la passerelle résidentielle (GW_P) et le numéro de port via lequel le module mandataire peut être joint à partir d'une entité du réseau invité.

Pour ce qui est de l'invocation des actions UPnP, le module mandataire conserve les informations originales provenant du dispositif qu'il représente lorsqu'il relayer une commande / réponse UPnP vers un dispositif UPnP connecté au réseau invité.

Considérons à titre d'exemple l'action UPnP « Browse » invoquée par le dispositif de restitution DMP_I sur le serveur de contenu virtuel VDMS_P1 :
1. A l'étape 401, DMP_I invoque l'action « Browse » sur le mandataire VDMS_P1 ;
2. A l'étape 402, le module mandataire VDMS_P1 relaie l'action « Browse » dans le réseau privé sur DMS_P1, les paramètres de l'action « Browse » étant transmis tels quels, sans modification par le module mandataire;
3. A l'étape 403, le serveur de contenus DMS_P1 traite l'action « Browse » et retourne la réponse au mandataire VDMS_P1.
4. A l'étape 404, le module mandataire VDMS_P1 retourne le résultat à DMP_I en effectuant la traduction des adresses URIs de contenus présentes dans la réponse du serveur de contenus DMS_P1, de manière à ce que ces adresses, après traduction, désignent le module mandataire VDMS_P1 comme entité auprès de laquelle le contenu considéré est susceptible d'être obtenu.
5. A l'étape 405, le dispositif UPnP DMP_I émet une requête HTTP de type "GET" pour obtenir les données d'un contenu référencé par le serveur de contenus DMS_P1;
6. A l'étape 406, compte-tenu de la traduction effectuée à l'étape 404 par le module mandataire VDMS_P1 sur l'adresse de ce contenu, cette requête HTTP parvient au module mandataire VDMS_P1;
7. A l'étape 407, le module mandataire VDMS_P1 effectue la traduction inverse de la traduction effectuée à l'étape 404, en extrayant de l'adresse URI reçue à l'étape 406 l'adresse URI originale qui désigne le serveur de contenus DMS_P1 comme l'entité référençant le contenu ; le module mandataire VDMS_P1 envoie alors une requête HTTP de type "GET" au serveur de contenus DMS_P1 comprenant l'adresse URI originale.
8. A l'étape 408, le serveur de contenus DMS_P reçoit la requête HTTP et transmet les données du contenu à l'entité émettrice de la requête HTTP, c'est-à-dire au dispositif UPnP DMP_I, via le module mandataire.

L'invention est bien entendu applicable à tout autre scénario nécessitant le pilotage d'une entité UPnP d'un réseau privé à partir d'un réseau invité: restitution d'un contenu d'un réseau privé sur un dispositif de restitution d'un autre réseau privé ou du même réseau privé, consultation des contenus de serveurs localisés dans différents réseaux invités, impression d'un contenu d'un réseau invité sur un Digital Media Printer d'un réseau privé, etc.

Les étapes décrites au regard des figures 3 et 4 sont transposables à la représentation d'un dispositif UPnP connecté au réseau invité RS_I par un module mandataire qui simule la présence dans le réseau privé du dispositif UPnP représenté.
1. Le module de découverte « Guest Device Discovery » (GDD_I) intercepte les messages d'annonce SSDP provenant des dispositifs UPnP du réseau invité RS_I. Par conséquent il détecte la présence dans le réseau invité RS_I des dispositifs DMS_I et DMR_I.
   Dans une variante de réalisation, le module de découverte GDD_I envoie un message SSDP (de type "m-search") de recherche de dispositifs UPnP présents dans le réseau invité RS_I. Ce message de recherche est par exemple émis à l'initialisation du module de découverte GDD_I qui attend ensuite de recevoir une réponse, sous forme de message d'annonce SSDP, à ce message de recherche.
2. Le module de découverte « Guest Device Discovery » (GDD_I) informe le module d'émulation « Guest Virtual Device Manager » GVDM_I de la présence des différents dispositifs UPnP pour lesquels un message d'annonce SSDP a été reçu à l'étape précédente.
3. Le module d'émulation « Guest Virtual Device Manager » GVDM_I instancie deux modules mandataires :
   a. Le dispositif de restitution mandataire VDMR_I ;
   b. Le serveur de contenus mandataire VDMS_I.
      La description XML d'un dispositif UPnP représenté et de ses services est stockée par le module mandataire représentant ce dispositif invité pour assurer cette fonction d'interface entre les deux réseaux RS_P et RS_I.
4. Les modules mandataires VDMS_I, VDMR_I s'annoncent sur le réseau privé RS_P en envoyant des messages d'annonce « SSDP:alive », reçus par un dispositif UPnP d'un terminal de l'utilisateur U1. Chaque module mandataire VDMS_I, VDMR_I est apte à communiquer via le réseau privé RS_P avec les entités connectées à ce réseau privé RS_P. L'interfaçage des dispositifs du réseau est donc effectué, en ce qu'un dispositif UPnP privé, connecté au réseau privé, est susceptible de dialoguer avec un dispositif UPnP invité, connecté au réseau invité, par l'intermédiaire du module mandataire représentant ce dispositif UPnP invité et servant de relais de communication entre le dispositif UPnP privé, connecté au réseau privé et le dispositif UPnP invité, connecté au réseau invité.

Pour ce qui est de l'invocation des actions UPnP, le module mandataire conserve les informations originales provenant du dispositif qu'il représente lorsqu'il relaye une commande / réponse UPnP vers un dispositif UPnP connecté au réseau invité.

Considérons à titre d'exemple l'action UPnP « Browse » invoquée par le dispositif de restitution DMP_P2 sur le serveur de contenu virtuel VDMS_I :
1. DMP_P2 invoque l'action « Browse » sur le module mandataire VDMS_I ;
2. Le module mandataire VDMS_I relaie l'action « Browse » dans le réseau privé sur DMS_I, les paramètres de l'action « Browse » étant transmis tels quels, sans modification par le module mandataire;
3. Le serveur de contenus DMS_I traite l'action « Browse » et retourne la réponse au mandataire VDMS_I.
4. Le module mandataire VDMS_I retourne le résultat à DMP_P2 en effectuant la traduction des adresses URIs de contenus présentes dans la réponse du serveur de contenus DMS_I, de manière à ce que ces adresses, après traduction, désignent le module mandataire VDMS_I comme entité auprès de laquelle le contenu considéré est susceptible d'être obtenu.
5. Le dispositif UPnP DMP_P2 émet une requête HTTP de type "GET" pour obtenir les données d'un contenu référencé par le serveur de contenus DMS_I;
6. Compte-tenu de la traduction effectuée à l'étape 4 par le module mandataire VDMS_I sur l'adresse de ce contenu, cette requête HTTP parvient au module mandataire VDMS_I;
7. Le module mandataire VDMS_I effectue la traduction inverse de la traduction effectuée à l'étape 4, en extrayant, de l'adresse URI reçue à l'étape 6, l'adresse URI originale qui désigne le serveur de contenus DMS comme l'entité référençant le contenu ; le module mandataire VDMS_I envoie alors une requête HTTP de type "GET" au serveur de contenus DMS_I comprenant l'adresse URI originale.
8. Le serveur de contenus DMS_P reçoit la requête HTTP et transmet les données du contenu à l'entité émettrice de la requête HTTP, c'est-à-dire au dispositif UPnP DMP_P2, via le module mandataire.

### 5.3 Autres caractéristiques optionnelles et avantages

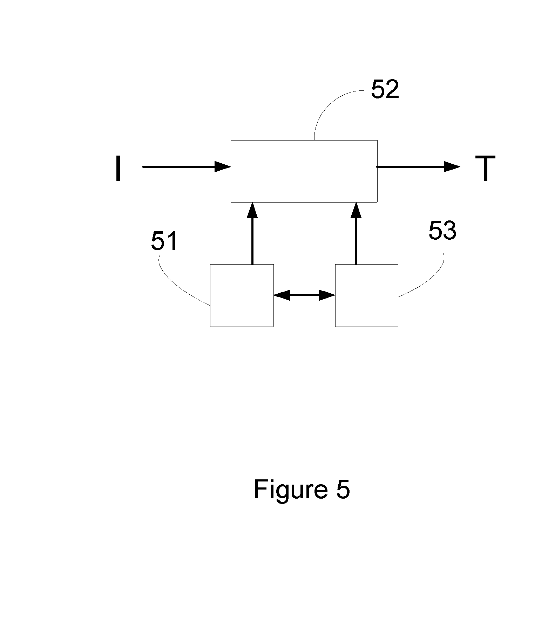

On présente, en relation avec la figure 5, un mode de réalisation d'une passerelle résidentielle intégrant les fonctions préalablement décrites.

La figure 5 représente de manière simplifiée un exemple de structure d'une passerelle résidentielle GW_P selon un mode de réalisation de l'invention.

Par exemple, la passerelle résidentielle GW_P comprend une mémoire 51 constituée d'une mémoire tampon, une unité de traitement 52, équipée par exemple d'un microprocesseur et de mémoire vive, et pilotée par le programme d'ordinateur 53, mettant en oeuvre un procédé de partage selon l'invention.

A l'initialisation, les instructions de code du programme d'ordinateur 53 sont par exemple chargées dans une mémoire avant d'être exécutées par le processeur de l'unité de traitement 52.

L'unité de traitement 52 reçoit en entrée un message émis via le réseau invité par une entité UPnP lors de la mise en oeuvre d'une procédure de découverte dans le réseau invité d'entités présentant une interface de communication conforme au protocole SSDP.

L'unité de traitement 52 active un module mandataire, apte à communiquer via le réseau invité avec l'entité UPnP conformément au protocole de commande et simulant la présence au sein du deuxième réseau d'au moins une première entité du premier réseau.

L'unité de traitement 52 reçoit en outre, par le module mandataire, en provenance de l'entité UPnP une commande conforme au protocole de commande et transmet, par le module mandataire, la commande, à une entité UPnP d'un réseau de communication privé.

Le microprocesseur de l'unité de traitement 52 met en oeuvre les étapes du procédé de partage pour permettre l'accès, par des dispositifs du réseau invité aux contenus partagés par les mandataires crées, selon les instructions du programme d'ordinateur 53.

Pour cela, la passerelle résidentielle GW_P comprend, outre la mémoire tampon 51, des moyens de réception, de transmission et de traduction tels qu'ils ont été préalablement décrits. Ces moyens sont pilotés par le microprocesseur de l'unité de traitement 52.

## Revendications

1. Procédé d'interfaçage d'au moins une première entité d'un premier réseau local avec une deuxième entité d'un deuxième réseau local, interconnecté avec le premier réseau via une passerelle, les première et deuxième entités présentant une interface de communication conforme à un protocole de commande, le procédé comprenant :
- une étape de réception par la passerelle d'un message émis via le deuxième réseau par la deuxième entité lors de la mise en oeuvre d'une procédure de découverte dans le deuxième réseau d'entités présentant une interface de communication conforme audit protocole;
- une étape (301) de mise en oeuvre par la passerelle d'une procédure de découverte dans le premier réseau d'entités présentant une interface de communication conforme audit protocole lors de laquelle la première entité est détectée dans le deuxième réseau;
- une étape (303) d'activation par la passerelle d'un module mandataire, apte à communiquer via le deuxième réseau avec la deuxième entité conformément audit protocole de commande et simulant la présence au sein du deuxième réseau de la première entité.

2. Procédé d'interfaçage, selon la revendication 1, comprenant une étape (304) d'émission, par le module mandataire via le deuxième réseau, d'un message à destination de la deuxième entité lors de la procédure de découverte dans le deuxième réseau.

3. Procédé d'interfaçage, selon la revendication 1, dans lequel la première entité est connectée à ladite passerelle via une première interface réseau et la deuxième entité est connectée à ladite passerelle via une deuxième interface réseau, distincte de la première interface et réservée aux entités connectées au deuxième réseau, le procédé étant **caractérisé en ce qu'**il comprend :
- une étape de réception, par le module mandataire, en provenance de la deuxième entité via la deuxième interface et le deuxième réseau, d'une commande conforme audit protocole ; et
- une étape de transmission, par le module mandataire, de ladite commande, à la première entité via la première interface et le premier réseau.

4. Procédé d'interfaçage, selon la revendication 3, dans lequel ledit message est un message de recherche d'entités présentant une interface de communication conforme audit protocole, **caractérisé en ce que** le procédé comprend une étape de transmission, à la deuxième entité, d'un identifiant dudit module mandataire et d'une description d'au moins un service mis en oeuvre par la première entité.

5. Procédé selon la revendication 1, **caractérisé en ce que** l'étape d'activation du module mandataire est destinée à être mise en oeuvre si la première entité appartient à un ensemble d'entités auquel une entité du deuxième réseau est autorisée à accéder.

6. Procédé selon la revendication 1, **caractérisé en ce que** l'étape d'activation du module mandataire est mise en oeuvre suite à une réception d'un message d'annonce indiquant la présence de la première entité dans le premier réseau.

7. Procédé selon la revendication 1, **caractérisé en ce qu'**il comprend :
- une étape de réception, par le module mandataire en provenance de la deuxième entité, d'une commande conforme audit protocole de commande;
- une étape de transmission de ladite commande à la première entité.

8. Procédé selon la revendication 1, **caractérisé en ce qu'**il comprend :
- une étape de traduction, par le module mandataire, d'au moins une adresse de contenu référencé par la première entité, de sorte que l'adresse traduite désigne le module mandataire comme entité auprès de laquelle ledit contenu est susceptible d'être obtenu ; et
- une étape de transmission de l'adresse traduite à la deuxième entité.

9. Procédé selon la revendication 1, **caractérisé en ce que** le module mandataire simule la présence dans le deuxième réseau d'un serveur de contenus référençant un ensemble de contenus référencés par plusieurs serveurs de contenus du premier réseau.

10. Procédé selon la revendication 9, **caractérisé en ce que** qu'il comprend une étape d'agrégation par le module mandataire des métadonnées des contenus référencés par lesdits serveurs de contenus du premier réseau.

11. Système d'interfaçage d'au moins une première entité d'un premier réseau avec une deuxième entité d'un deuxième réseau interconnecté avec le premier réseau par l'intermédiaire d'une passerelle, les première et deuxième entités présentant une interface de communication conforme à un protocole de commande, comprenant
- des moyens de mise en oeuvre d'une procédure de découverte dans le premier réseau d'entités présentant une interface de communication conforme audit protocole, aptes à détecter la première entité dans le deuxième réseau;
- des moyens de réception d'un message émis via le deuxième réseau par la deuxième entité lors de la mise en oeuvre d'une procédure de découverte dans le deuxième réseau d'entités présentant une interface de communication conforme audit protocole;
- des moyens d'activation d'un module mandataire, apte à communiquer via le deuxième réseau avec la deuxième entité conformément audit protocole de commande et simulant la présence au sein du deuxième réseau de la première entité.

12. Système d'interfaçage, selon la revendication 11, dans lequel la première entité est connectée à ladite passerelle via une première interface réseau et la deuxième entité est connectée à ladite passerelle via une deuxième interface réseau, distincte de la première interface et réservée aux entités connectées au deuxième réseau, le système étant **caractérisé en ce qu'**il comprend :
- des moyens de réception, par le module mandataire, en provenance de la deuxième entité via la deuxième interface, d'une commande conforme audit protocole ; et
- des moyens de transmission, par le module mandataire, de ladite commande, à la première entité.

13. Passerelle résidentielle comprend un système selon l'une quelconque des revendications 11 et 12.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'interfaçage selon l'une quelconque des revendications 1 à 10, lorsqu'il est exécuté sur un ordinateur.
